# EUROPÄISCHE PATENTANMELDUNG

(11) **EP 0 739 811 A2**
(43) Veröffentlichungstag der Anmeldung: **30.10.1996**
(21) Anmeldenummer: 96105035.8
(22) Anmeldetag: 29.03.1996
(51) Int. Cl.: B62K 25/04

(54) **Fahrrad mit Dämpfungssystem**

(30) Priorität: 31.03.1995 DE 19512049; 07.07.1995 DE 19524789
(71) Anmelder: Hunger, Walter, Dr.-Ing. E.h., D-97074 Würzburg (DE)
(72) Erfinder: Hunger, Walter, Dr.-Ing. E.h., D-97074 Würzburg (DE)
(74) Vertreter: Witte, Alexander, Dr.-Ing.

(57) **Zusammenfassung**

Ein Fahrrad (10) umfaßt einen Rahmen (11) und einen am Rahmen (11) befestigten Sattel (20). Zwischen Rahmen (11) und Sattel (20) ist ein Feder- und Dämpfungselement (22) angeordnet. Das Element (22) umfaßt ein hydraulisches Dämpfungssystem sowie ein Federelement. Das hydraulische Dämpfungssystem weist beim Einfedern und beim Ausfedern des Feder- und Dämpfungselementes (22) eine unterschiedliche Dämpfungskonstante auf.

## Beschreibung

Die Erfindung betrifft ein Fahrrad mit einem Rahmen und einem am Rahmen befestigten Sattel, wobei zwischen Rahmen und Sattel ein Feder- und Dämpfungselement angeordnet ist, das ein hydraulisches Dämpfungssystem sowie ein Federelement umfaßt.

Ein Fahrrad der vorstehend genannten Art ist aus der US-PS 55 044 648 bekannt.

Bei dem bekannten Fahrrad ist das Feder- und Dämpfungselement von teleskopartiger Bauart. Es kann in das handelsübliche Trägerrohr im Rahmen des Fahrrades eingesetzt werden, dessen oberes freies Ende den Fahrradsattel trägt. Das Feder- und Dämpfungselement umfaßt ein äußeres Rohr, das als Zylinder wirkt. In dem äußeren Rohr ist dicht eine Kolbenstange geführt, die an ihrem unteren freien Ende eine als Kolben wirkende Lochplatte umfaßt. Das untere freie Ende ist über eine Schraubenfeder an einem unteren Boden des Feder- und Dämpfungselementes abgestützt. Die Federkonstante kann dabei verändert werden, indem der Boden mittels einer Justierschraube in seiner axialen Lage verstellt wird. Alternativ ist zur Verstellung der Federkonstante ein kleines Luftkissen einsetzbar.

Beim Einfedern des Feder- und Dämpfungselementes wandert die Kolbenstange mit der daran befestigten Lochplatte nach unten. Eine zuvor eingedrückte Hydraulikflüssigkeit tritt durch die Löcher der Lochplatte hindurch und in einen an einer Seite der Kolbenstange vorgesehenen Raum hinein. Die Dämpfungskonstante hängt dabei von der Größe des Lochs in der Lochplatte ab. Durch entsprechende Dimensionierung des Loches kann die Dämpfungskonstante voreingestellt werden. Gleichzeitig wird die Schraubenfeder mit der eingestellten Federkonstante komprimiert.

Beim Ausfedern des Feder- und Dämpfungselementes tritt derselbe Prozeß in umgekehrter Reihenfolge ein, wobei die Dämpfungs- und die Federkonstante dieselben sind.

Bei dem bekannten Fahrrad soll insbesondere für den Einsatz bei sogenannten Mountain Bikes erreicht werden, daß der Fahrer beim Fahren durch ein unebenes Gelände von den auf das Fahrrad einwirkenden Stößen bestmöglich abgekoppelt wird.

Das bekannte Fahrrad ist jedoch hinsichtlich seiner Dämpfungs- und Federeigenschaften nicht optimal. Zum einen unterscheidet das Feder- und Dämpfungselement des bekannten Fahrrades nicht zwischen den Vorgängen des Einfederns und des Ausfederns, und zum anderen ist eine Einstellung der Federkonstante bei einer Schraubenfeder sehr umständlich und nur in begrenzten Bereichen möglich.

Der Erfindung liegt demgegenüber die Aufgabe zugrunde, ein Fahrrad der eingangs genannten Art dahingehend weiterzubilden, daß die vorstehend genannten Nachteile vermieden werden und damit der Fahrkomfort vor allem bei solchen Fahrrädern verbessert wird, die in unwegsamem Gelände eingesetzt werden. Es soll damit erreicht werden, daß der Fahrer eines solchen Fahrrades auch bei einer Fahrt durch sehr unebenes Gelände überwiegend auf dem Sattel sitzen bleiben kann, während bei herkömmlichen Fahrrädern die Fahrer während eines Großteils der Fahrt vom Fahrradsattel abheben, um sich nicht zu großen Stößen auszusetzen.

Diese Aufgabe wird erfindungsgemäß dadurch gelöst, daß das hydraulische Dämpfungssystem beim Einfedern und beim Ausfedern des Feder- und Dämpfungselementes eine unterschiedliche Dämpfungskonstante aufweist.

Die der Erfindung zugrunde liegende Aufgabe wird auf diese Weise vollkommen gelöst.

Durch die Differenzierung der Vorgänge beim Einfedern und beim Ausfedern wird nämlich erreicht, daß z.B. beim Durchfahren eines Schlaglochs oder einer ähnlichen Senke das Rad schnell einfedern kann, dann aber nur langsam wieder ausfedert.

Bei ersten vorteilhaften Ausführungsbeispielen besteht das Federelement nur aus einem pneumatischen Element.

Die Verwendung eines pneumatischen Federelementes hat darüber hinaus den Vorteil, daß eine bessere Federwirkung erzielt wird und daß die Federkonstante mit einfachen Mitteln eingestellt werden kann.

Dadurch, daß das Federelement nur aus einem pneumatischen Element besteht, wird die Anzahl der das Federelement bildenden Teile minimiert, und mit dieser Maßnahme wird daher das baulich einfachste Federelement realisiert.

In anderen Ausführungsbeispielen umfaßt das Federelement ein pneumatisches Element und zusätzlich mindestens ein elastomeres Element und/oder mindestens eine Stahldruckfeder.

Durch diese Maßnahme können verschiedene Elemente mit verschiedenen Federkonstanten zu einem Federelement zusammengefügt werden, wobei sich durch die Kombination der verschiedenen Elemente, insbesondere mit dem pneumatischen Federelement, eine besonders gute Federwirkung erzielen läßt.

In einer vorteilhaften Weitergestaltung ist das pneumatische Element parallel zu einer Reihenschaltung aus dem elastomeren Element und der Stahldruckfeder geschaltet.

Hierdurch wird eine besonders vorteilhafte Anordnung des Federelementes erzielt. Das elastomere Element kann zum Beispiel so gewählt werden, daß seine Federkonstante kleiner ist als die der Stahldruckfeder. Durch die Reihenschaltung von dem elastomeren Federelement mit der Stahldruckfeder können leichte Stöße von dem elastomeren Element allein abgefedert werden, während härtere Stöße dann beim weiteren Einfedern des Federelementes zusätzlich von der härteren Stahldruckfeder aufgenommen werden. Die Federwirkung dieser Reihenschaltung aus dem elastomeren Element und der Stahldruckfeder wird dabei durch die Parallelschaltung der Reihenschaltung mit dem pneumatischen Element unterstützt. Da die Federkonstante des pneumatischen Elementes bei geringer Einfederung konstant und aufgrund der Kompressibilität der Luft klein ist, dann jedoch bei zunehmender Einfederung rasch zunimmt, bildet das pneumatische Element bezüglich seiner Federkonstante einen stetigen Übergang zwischen den Federkonstanten des elastomeren Elementes und der Stahldruckfeder.

Darüber hinaus besteht ein Vorteil darin, daß die Federkonstante des pneumatischen Elementes leicht verstellbar ist und somit optimal an die beiden anderen Elemente angepaßt werden kann, so daß insgesamt eine optimale Federwirkung erzielt wird.

Weiterhin läßt sich eine Stahldruckfeder vorteilhaft mit einem pneumatischen Element parallel schalten, da die Stahldruckfeder nur einen geringen Raum benötigt, so daß ein für das pneumatische Element zur Verfügung stehender Luftraum durch die Stahldruckfeder nur unwesentlich verkleinert wird.

Ebenso ist es vorteilhaft, daß das Federelement auch bei einem Luftverlust des pneumatischen Elementes noch funktionsfähig bleibt.

Bei einer bevorzugten Ausgestaltung der Erfindung ist mindestens eine Dämpfungskonstante im Betrieb des Feder- und Dämpfungselementes einstellbar.

Diese Maßnahme hat den Vorteil, daß der Fahrer je nach der Beschaffenheit des zu befahrenden Geländes, aber auch in Abhängigkeit von der gewünschten Fahrweise, von seinem Körpergewicht usw., eine ihm genehme Dämpfungskonstante einstellen kann, während bei bekannten Fahrrädern die Einstellung der Dämpfungskonstante nur einmal, nämlich bei der Herstellung des Feder- und Dämpfungselementes durch Verwendung einer Lochplatte mit einer bestimmten Lochgröße, möglich war.

Bevorzugt ist zum Einstellen der mindestens einen Dämpfungskonstante eine erste Verstelleinrichtung am Feder- und Dämpfungselement angeordnet.

Diese Maßnahme hat den Vorteil, daß die Dämpfungskonstante in sehr einfacher Weise verstellt werden kann, unter Umständen sogar während der Fahrt.

Bei weiteren bevorzugten Ausgestaltungen der Erfindung weist das pneumatische Element eine im Betrieb des Feder- und Dämpfungselementes einstellbare Federkonstante auf.

Auch diese Maßnahme hat den Vorteil, daß der Fahrer, insbesondere in Abhängigkeit von seinem Körpergewicht, die ihm genehme Federkonstante einstellen kann.

Dies gilt insbesondere dann, wenn zum Einstellen der Federkonstante eine zweite Verstelleinrichtung am Feder- und Dämpfungselement angeordnet ist. Auch dann ist eine Verstellung der Federkonstante sogar während der Fahrt möglich.

In diesen Fällen kann der Fahrer daher beispielsweise dann, wenn nacheinander Gelände unterschiedlicher Beschaffenheit befahren werden, sowohl die Dämpfungskonstante wie auch die Federkonstante verstellen, wenn er beispielsweise einen Abschnitt der Strecke auf einer asphaltierten Straße und dann einen weiteren Abschnitt der Strecke auf einem unwegsamen Gelände fährt.

Bei bevorzugten Ausführungsformen der Erfindung umfaßt das Feder- und Dämpfungselement ein äußeres Rohr sowie ein darin geführtes inneres Rohr, wobei in dem inneren Rohr ein Hydraulikkolben läuft, der über eine erste Stange mit einem Sockelteil des äußeren Rohres verbunden ist und ferner die erste Stange dicht in einem Endabschnitt des inneren Rohres läuft.

Diese Maßnahme hat den Vorteil, daß mit einer Mindestzahl von Bauelementen eine zuverlässige hydraulische Dämpfungseinrichtung realisiert werden kann.

Bei einer Weiterbildung dieses Ausführungsbeispiels ist der Hydraulikkolben auf der von der ersten Stange abgewandten Seite mit einer zweiten Stange versehen, die mit einem unrunden Abschnitt in einer dazu komplementären Durchführung läuft, die mit dem inneren Rohr sowie einem Befestigungsflansch für den Sattel starr verbunden ist.

Diese Maßnahme hat den Vorteil, daß eine undrehbare Anordnung erreicht wird, bei der sich der Sattel nicht um die Längsachse des Trägerrohres verdrehen kann. Die hierzu erforderlichen Elemente sind extrem einfach im Aufbau und lassen sich mit geringem Herstellungsaufwand in das Feder- und Dämpfungselement integrieren.

Bei anderen Ausführungsformen umfaßt das Feder- und Dämpfungselement ein äußeres Rohr sowie ein darin geführtes inneres Rohr, wobei in dem inneren Rohr ein erstes Kolbenelement und ein dazu beabstandetes zweites Kolbenelement läuft, die beide über eine Stange mit einem Sockelelement des äußeren Rohres fest verbunden sind, wobei die Stange dicht in einem fest mit dem inneren Rohr verbundenen Dichtring läuft.

Mit dieser Maßnahme wird der Aufbau des Feder- und Dämpfungselementes weiter vereinfacht, da nun nur noch eine Stange benötigt wird, die die beiden Kolbenelemente trägt.

Bevorzugt ist dabei, wenn das erste Kolbenelement und das zweite Kolbenelement in einem offenen Ölraum laufen, wobei beim Einfedern des Feder- und Dämpfungselementes Öl aus dem offenen Ölraum in einen Saugraum zwischen dem Dichtring und dem zweiten Kolbenelement gesaugt wird.

Diese Ausführungsform ist besonders vorteilhaft, da selbst bei Ölverlusten aufgrund von Leckagen das Dämpfungselement noch so lange arbeitet, wie überhaupt Öl im offenen Ölraum vorhanden ist.

In einer Weiterbildung dieser Ausführungsform ist der offene Ölraum im Betrieb des Feder- und Dämpfungselementes mit Öl nachfüllbar.

Durch diese Maßnahme ist es möglich, das Feder- und Dämpfungselement auch während des Betriebes zu warten und dadurch funktionsfähig zu halten. Ölverluste in dem Dämpfungselement können somit sofort ausgeglichen werden, ohne daß dafür das Dämpfungselement zerlegt werden muß.

Bei einer weiteren Ausgestaltung ist zwischen dem ersten Kolbenelement und dem zweiten Kolbenelement ein Ventilelement angeordnet.

Mit dem Ventilelement werden die Vorgänge des Ein- und Ausfederns gesteuert, und zwar derart, daß die Dämpfungskonstante bei beiden Vorgängen unterschiedlich ist. In Verbindung mit der ersten Verstelleinrichtung können die Ventileigenschaften zur Einstellung der Dämpfungskonstante beim Ein- und Ausfedern entsprechend verändert werden.

In einer vorteilhaften Weiterbildung ist das Ventilelement federbelastet.

Insbesondere wenn das Ventilelement als Rückschlagventil ausgebildet ist, wird das Ventilspiel durch eine entsprechende Federvorspannung unterstützt.

In einer bevorzugten Weiterbildung ist ein Endabschnitt der Stange mit einer Umfangsverzahnung versehen, die in einer dazu komplementären Durchführung läuft, die mit dem inneren Rohr sowie einem Gegenflansch für den Sattel starr verbunden ist.

Hierdurch wird wiederum verhindert, daß sich der Sattel um die Längsachse des Trägerrohres dreht.

In einer anderen Ausführungsform ist die Stange mittels mindestens eines Querstiftes und/oder einer in einer Nut eines rohrartigen Fortsatzes eines Gegenflansches laufenden Paß- oder Scheibenfeder in dem inneren Rohr und dem äußeren Rohr undrehbar gesichert.

Durch diese Maßnahme ist die Stange während des Betriebes gegen Verdrehungen und gegen Torsion gesichert.

In einer noch anderen Ausführungsform ist die Stange mittels Stahlkugeln, die in einer axialen Nut der Stange laufen, in dem inneren Rohr und dem äußeren Rohr undrehbar gesichert.

Mit dieser Maßnahme wird ebenfalls die Stange in dem Feder- und Dämpfungselement undrehbar gehalten, wobei darüber hinaus ein besonders reibungsarmer Lauf der Stange in axialer Richtung in dem inneren Rohr gewährleistet wird.

In einer weiteren bevorzugten Ausgestaltung weist die Stange eine axiale Bohrung auf, die mit einem abgeschlossenen Luftraum kommuniziert.

Durch diese Maßnahme kann der Arbeitsraum des pneumatischen Federelementes vergrößert werden, ohne die Außenabmessungen des Feder- und Dämpfungselementes größer ausführen zu müssen. Dies ist wichtig, da der Außendurchmesser aus Normgründen festliegt und auch die Baulänge des Elementes nicht unbeschränkt sein kann.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert. Es zeigen:
- Fig. 1: eine äußerst schematisierte Seitenansicht eines Ausführungsbeispiels eines erfindungsgemäßen Fahrrades;
- Fig. 2A bis 2C: einen Längsschnitt in drei Teilbildern eines ersten Ausführungsbeispiels eines Feder- und Dämpfungselementes, wie es beim Fahrrad gemäß Fig. 1 eingesetzt werden kann;
- Fig. 3A bis 3C: einen Längsschnitt in drei Teilbildern eines zweiten Ausführungsbeispiels des Feder- und Dämpfungselementes;
- Fig. 4A bis 4C: einen Längsschnitt in drei Teilbildern eines dritten Ausführungsbeispiels des Feder- und Dämpfungselementes;
- Fig. 5: einen Längsschnitt eines vierten Ausführungsbeispiels eines ersten Abschnittes des Feder- und Dämpfungselementes ähnlich den Fig. 2C, 3C und 4C.

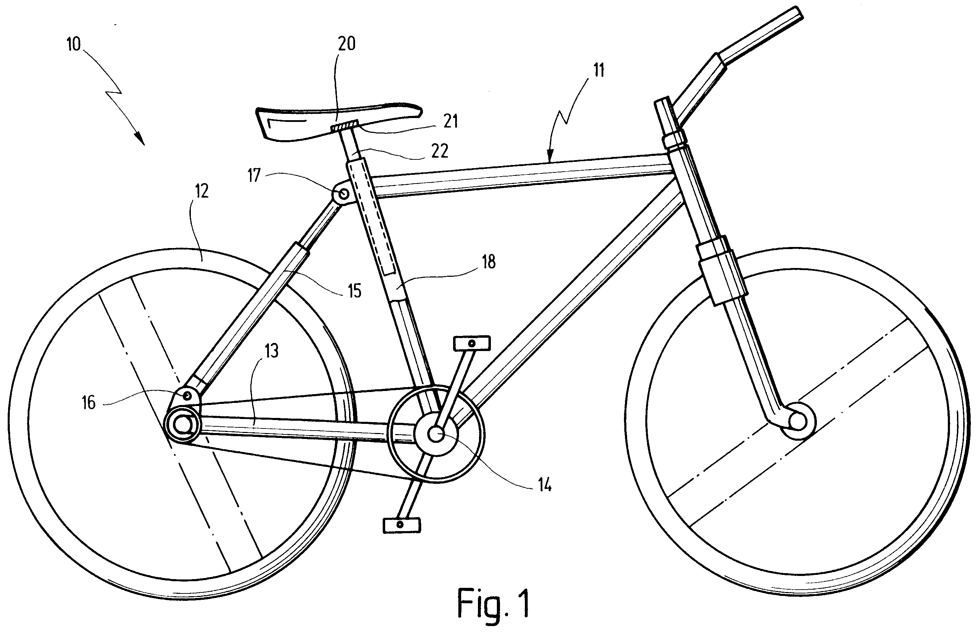

In Fig. 1 bezeichnet 10 als Ganzes ein Fahrrad. Obwohl die vorliegende Erfindung mit besonderem Vorteil bei sogenannten Mountain Bikes eingesetzt werden kann, ist sie nicht auf diesen Anwendungsfall beschränkt. Die Erfindung kann vielmehr bei allen Arten von Fahrrädern eingesetzt werden, wobei unter "Fahrrad" auch Motorroller, Motorräder, Trikes usw. zu verstehen sind.

Das Fahrrad 10 umfaßt einen Rahmen 11. Ein Hinterrad 12 ist beidseits in einer Schwinge 13 gelagert. Die Schwinge 13 ist ihrerseits am vorderen Ende in einer Tretlagerachse 14 des Rahmens 11 gelagert.

Zwischen der Achse des Hinterrades 12 und dem Rahmen 11 ist ein Paar von ersten Feder- und Dämpfungselementen 15 vorgesehen, die das Hinterrad 12 zwischen sich einschließen. Hierzu ist ein erster Anschlagpunkt 16 in der Nähe der Achse des Hinterrades 12 sowie ein zweiter Anschlagpunkt 17 an einem Stützrohr 18 des Rahmens 11 vorgesehen, zwischen denen die ersten Feder- und Dämpfungselemente 15 verlaufen. Der zweite Anschlagpunkt 17 ist dabei am Stützrohr 18 kurz unterhalb eines Sattels 20 angeordnet.

Der Sattel 20 ist mittels eines Flansches 21 an einem zweiten Feder- und Dämpfungselement 22 befestigt. Das zweite Feder- und Dämpfungselement 22 ist in das Stützrohr 18 eingeschoben.

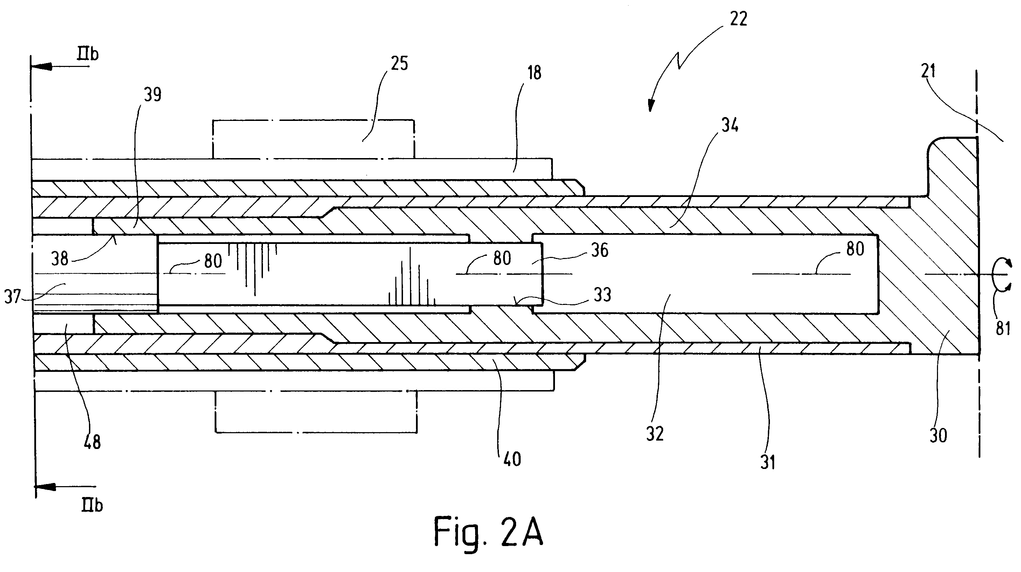

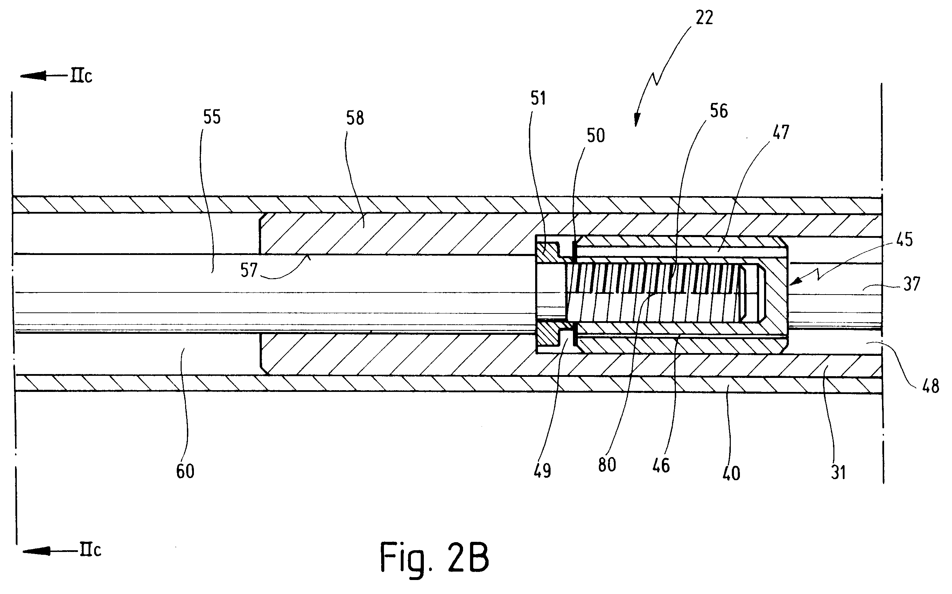

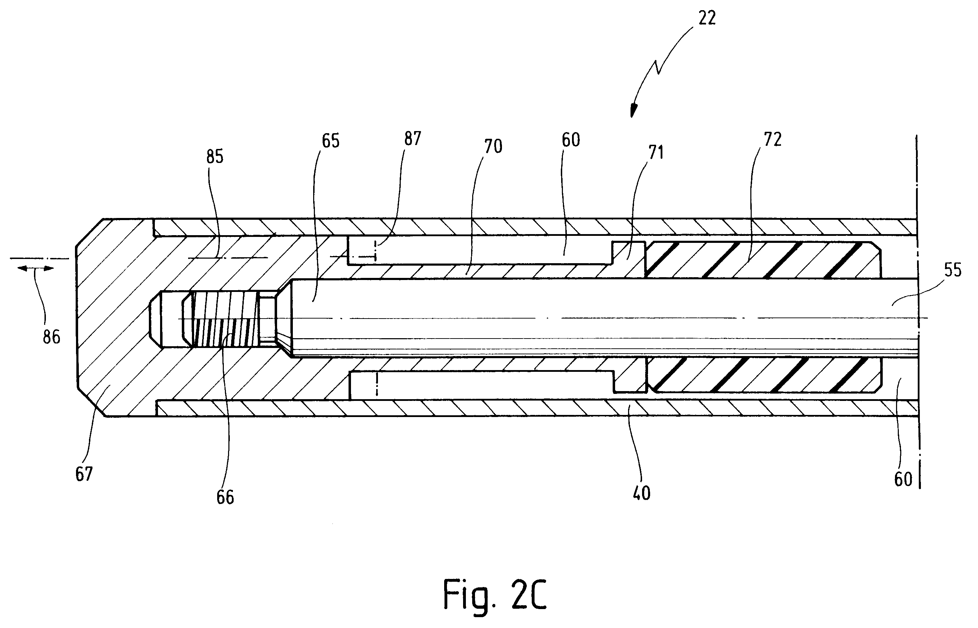

In den Figuren 2A bis 2C ist das zweite Feder- und Dämpfungselement 22 in weiteren Einzelheiten dargestellt, wobei Fig. 2A einen ersten Abschnitt unterhalb des Sattels 20, Fig. 2B einen mittleren Abschnitt und Fig. 2C einen unteren Abschnitt zeigt.

In Fig. 2A ist zu erkennen, daß das Feder- und Dämpfungselement 22 in das strichpunktiert angedeutete Stützrohr 18 eingeschoben und dort mittels einer nur schematisch angedeuteten Klemmeinrichtung 25 fixiert ist.

Am oberen Ende des zweiten Feder- und Dämpfungselementes 22 ist ein Gegenflansch 30 zu erkennen, der in an sich bekannter Weise, beispielsweise mittels Schrauben, am Flansch 21 des Sattels 20 befestigt werden kann. Der Gegenflansch 30 trägt ein inneres Rohr 31. Hierzu ist der Gegenflansch 30 mit einem rohrartigen Fortsatz 34 versehen, der in das obere Ende des inneren Rohres 31 eingeschoben wird.

Der rohrartige Fortsatz 34 bildet an seinem oberen Ende einen belüfteten Hohlraum 32. Im mittleren Abschnitt des rohrartigen Fortsatzes 34 ist eine unrunde Durchführung 33 von beispielsweise guadratischem Querschnitt vorgesehen. Die unrunde Durchführung 33 führt ein dazu komplementäres unrundes freies Ende 36 einer ersten Stange 37. Die im unteren Abschnitt zylindrische erste Stange 37 wird in ihrem zylindrischen Bereich von einer Durchführung 38 am unteren freien Ende des rohrartigen Fortsatzes 34 geführt. Damit ist die erste Stange 37 undrehbar, jedoch axial verschiebbar mit dem rohrartigen Fortsatz 34 und damit dem Gegenflansch 30 verbunden.

An ihrem unteren, d.h. in Fig. 2B linken Ende ist die erste Stange 37 fest mit einem Hydraulikkolben 45 verbunden. Der Hydraulikkolben 45 ist mit mindestens zwei ihn axial durchsetzenden Kanälen versehen, nämlich mit einem engen Kanal 46 sowie einem weiten Kanal 47. Der Hydraulikkolben 45, der dicht im inneren Rohr 31 geführt ist, unterteilt damit im inneren Rohr 31 einen ersten Ölraum 48, in Fig. 2B rechts vom Hydraulikkolben 45, und einen zweiten Ölraum 49, in Fig. 2B links vom Hydraulikkolben 45.

Auf der in Fig. 2B linken Seite des Hydraulikkolbens 45 ist eine Klappe 50 vorgesehen. Die Klappe 50 ist mittels eines Distanzstücks 51 an der linken Seite des Hydraulikkolbens 45 gehalten. Die Klappe 50 verschließt den weiten Kanal 47, wenn der Hydraulikkolben 45 sich in Fig. 2B von rechts nach links bewegt, während sie in umgekehrter Bewegungsrichtung vom weiten Kanal 47 abhebt. Auf diese Weise wird die Funktion eines Rückschlagventils realisiert. Im Bereich des engen Kanals 46 hat die Klappe 50 eine Aussparung, so daß die Funktion des engen Kanals 46 durch die Klappe 50 nicht beeinträchtigt wird.

Das Distanzstück 51 stützt sich auf der in Fig. 2B linken Seite gegen eine Ringschulter einer zweiten Stange 55 ab, die mittels eines Gewindes 56 in Fig. 2B von links in den Hydraulikkolben 45 eingeschraubt ist. Die zweite Stange 55 läuft im übrigen in einer dazu komplementären Durchführung 57 eines Endabschnitts 58 des inneren Rohres 31. Der Endabschnitt 58 ist im Querschnitt verdickt und wirkt als Pneumatikkolben, wie noch beschrieben werden wird.

Vom Endabschnitt 58 erstreckt sich links in Fig. 2B ein Luftraum 60.

Ein linkes freies Ende 65 der zweiten Stange 55 ist mittels eines Gewindes 66 in ein Sockelteil 67 eingeschraubt, wie man deutlich aus Fig. 2C erkennt. Das Sockelteil 67 ist ferner in das äußere Rohr 40 eingesteckt und mit diesem starr verbunden.

Das Sockelteil 67 trägt einen hülsenartigen Fortsatz 70, der die zweite Stange 55 umschließt. An dem in Fig. 2C rechten Ende des Fortsatzes 70 ist ein radialer Flansch 71 angeordnet. Auf dessen in Fig. 2 rechter Seite befindet sich ein elastisches Anschlagelement 72, das sich somit in den Luftraum 60 hineinerstreckt. Die Außendurchmesser des Anschlagelementes 72 und des Flansches 71 sind geringer bemessen als der Innendurchmesser des äußeren Rohres 40, so daß sich der Luftraum 60 von der in Fig. 2C rechten Seite des Anschlagelementes 72 nach links bis zum Sockelteil 67 hin erstreckt.

Schließlich ist in Fig. 2A und 2B mit 80 eine erste Verstelleinrichtung angedeutet, die z.B. aus einer axial verlaufenden Stange bestehen kann. Die erste Verstelleinrichtung 80 ist vom rechten Ende des zweiten Feder- und Dämpfungselementes 22 her zugänglich und kann z.B. verdreht werden, wie mit einem Pfeil 81 in Fig. 2A angedeutet. Die erste Verstelleinrichtung 80 dient zum Verstellen der Klappe 50 oder einer mit der Klappe 50 zusammenwirkenden, verdrehbaren Blende. Bei einer Betätigung der ersten Verstelleinrichtung 80 kann daher mittels einer geeigneten Blende erreicht werden, daß der wirksame Querschnitt im Bereich des weiten Kanals 47 und/oder des engen Kanals 46 verändert wird. Die Dämpfungskonstante des Hydraulikkolbens 45 ist somit ebenfalls einstellbar.

In Fig. 2C ist noch eine zweite Verstelleinrichtung 85 mittels einer strichpunktierten Linie angedeutet. Die zweite Verstelleinrichtung 85 kann ebenfalls aus einer axial verlaufenden Stange oder aus einer Spindel o. dgl. bestehen. Mittels eines Pfeils 86 ist angedeutet, daß hier eine axiale Verstellbarkeit erreicht werden soll, und zwar eine axiale Verstellbarkeit eines Bodens 87, mit dem das Sockelteil 67 in Fig. 2C links den Luftraum 60 begrenzt. Durch Verstellung des Bodens 87 in axialer Richtung wird das Volumen des Luftraumes 60 verändert und damit die Federkonstante.

Die Wirkungsweise der Anordnung gemäß den Fig. 2A bis 2C ist wie folgt:
In der dargestellten Lage ist das System vollständig ausgefedert. Der erste Ölraum 48 rechts vom Hydraulikkolben 45 ist daher maximal und der zweite Ölraum 49 minimal. Auch der Luftraum 60 ist in dieser Stellung maximal.

Wenn nun das System einfedert, indem das zweite Feder- und Dämpfungselement 22 in axialer Richtung belastet wird, bewegt sich das Sockelteil 67 mit dem äußeren Rohr 40 relativ zum Gegenflansch 30 und dem inneren Rohr 31 nach rechts. Über die zweite Stange 55 wird der Hydraulikkolben 45 nun im inneren Rohr 31 nach rechts verschoben. Dieser Verschiebebewegung setzt das hydraulische System nur einen relativ geringen Widerstand entgegen, weil der weite Kanal 47 bei geöffneter Klappe 50 einen schnellen Durchtritt des Hydraulikmediums vom ersten Ölraum 48 nach links in den zweiten Ölraum 49 gestattet. Gleichzeitig bewegt sich das Sockelteil 67 auf den als Pneumatikkolben wirkenden Endabschnitt 58 des inneren Rohres 31 zu, so daß der Luftraum 60 sich vermindert. Demzufolge tritt gleichzeitig eine wirksame pneumatische Federung und eine geringe hydraulische Dämpfung auf.

Federt das System nun wieder aus, verschiebt sich das äußere Rohr 40 relativ zum inneren Rohr 31 wieder nach links, weil dann, wenn die von außen nach rechts gerichtete Kraft auf das System nachläßt, die pneumatische Federung für eine Rückstellkraft sorgt.

Nun wird das System aber stark hydraulisch gedämpft, weil der weite Kanal 47 durch die Klappe 50 verschlossen ist und das Hydraulikmedium nur durch den engen Kanal 46 wieder vom zweiten Ölraum 49 nach rechts in den ersten Ölraum 48 übertreten kann.

Aus der vorstehenden Darlegung ergibt sich, daß der Feder- und Dämpfungsvorgang mittels der Verstelleinrichtungen 80 und 85 beeinflußt werden kann, wenn die Dämpfungskonstante des Hydraulikkolbens 50 durch Variation des wirksamen Durchtrittsquerschnitts verändert wird und andererseits die Einfederung des pneumatischen Systems dadurch verändert wird, daß das Volumen des Luftraums 60 variiert wird.

Beim Ein- und Ausfedern des Systems kann sich das äußere Rohr 40 gegenüber dem inneren Rohr 31 nicht um die Längsachse verdrehen, weil das äußere Rohr 40 starr mit der ersten Stange 37 verbunden ist, die sich zwar axial in der unrunden Durchführung 33 des rohrartigen Fortsatzes 34 verschieben, darin jedoch nicht drehen kann.

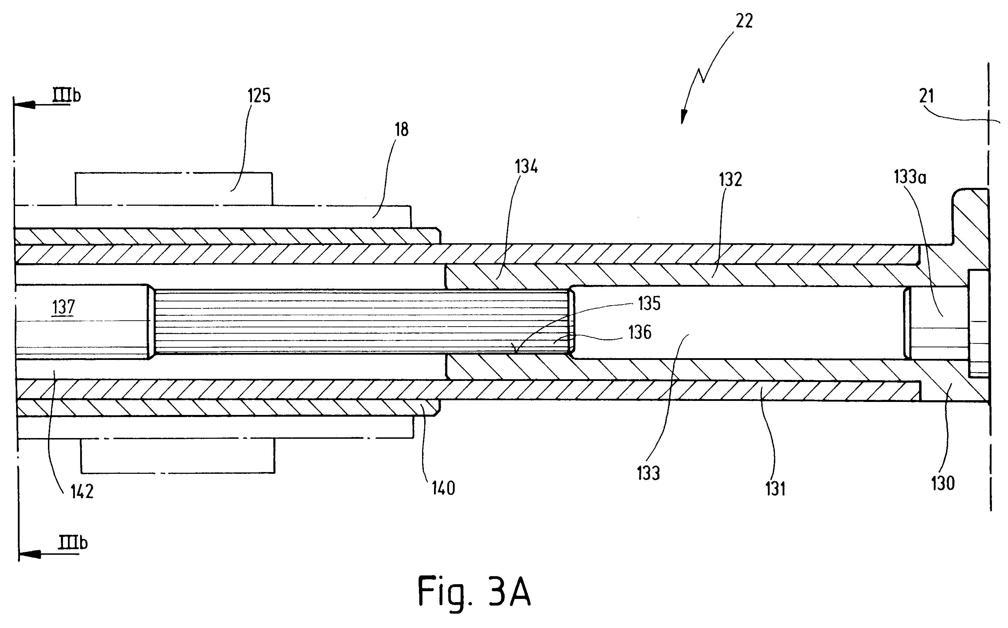

In den Figuren 3A bis 3C ist ein anderes Ausführungsbeispiel des zweiten Feder- und Dämpfungselementes 22 dargestellt, wie es ebenfalls in das strichpunktiert angedeutete Stützrohr 18 des Fahrrades 10 eingeschoben und mittels einer Klemmvorrichtung 125 befestigt werden kann.

In Fig. 3A ist am rechten Ende ein Gegenflansch 130 dargestellt, der wie im ersten Ausführungsbeispiel mit Befestigungsmitteln an dem Flansch 21 des Sattels 20 befestigt wird. Der Gegenflansch 130 trägt ein inneres Rohr 131, das mit einem rohrartigen Fortsatz 132 fest verbunden ist, wie dies in ähnlicher Weise im ersten Ausführungsbeispiel beschrieben wurde. Innerhalb des rohrartigen Fortsatzes 132 des Gegenflansches 130 befindet sich ein belüfteter Hohlraum 133, der in diesem Ausführungsbeispiel durch einen abnehmbaren Verschlußstopfen 133a dicht verschlossen ist.

Ein Endabschnitt 134 des rohrartigen Fortsatzes 132 dient als Durchführung 135 eines Endabschnittes 136 einer Stange 137. Der hier zylindrische Endabschnitt 136 der Stange 137 ist mit einer axial verlaufenden Umfangsverzahnung versehen, die in eine komplementäre Verzahnung der Durchführung 135 eingeschoben ist. Der Endabschnitt 136 läuft dabei nicht dicht in der Durchführung 135. Jedoch ist der zylindrische Endabschnitt 136 diesmal aufgrund der Umfangsverzahnung wie zuvor undrehbar und axial verschiebbar in der Durchführung 135 gelagert.

Das innere Rohr 131 ist axial verschiebbar in einem äußeren Rohr 140 aufgenommen.

Auf der in Fig. 2A linken Seite des Endabschnittes 134 des rohrartigen Fortsatzes 132 schließt sich ein offener Ölraum 142 an, der zu dem Hohlraum 133 hin offen ist, da, wie bereits erwähnt, der Endabschnitt 136 nicht dicht in der Durchführung 135 läuft. Ein dichter Abschluß des offenen Ölraumes 142 und des Hohlraumes 133 nach oben wird durch den Verschlußstopfen 132a gewährleistet. Der Verschlußstopfen 132a kann zum Nachfüllen von Öl entfernt werden.

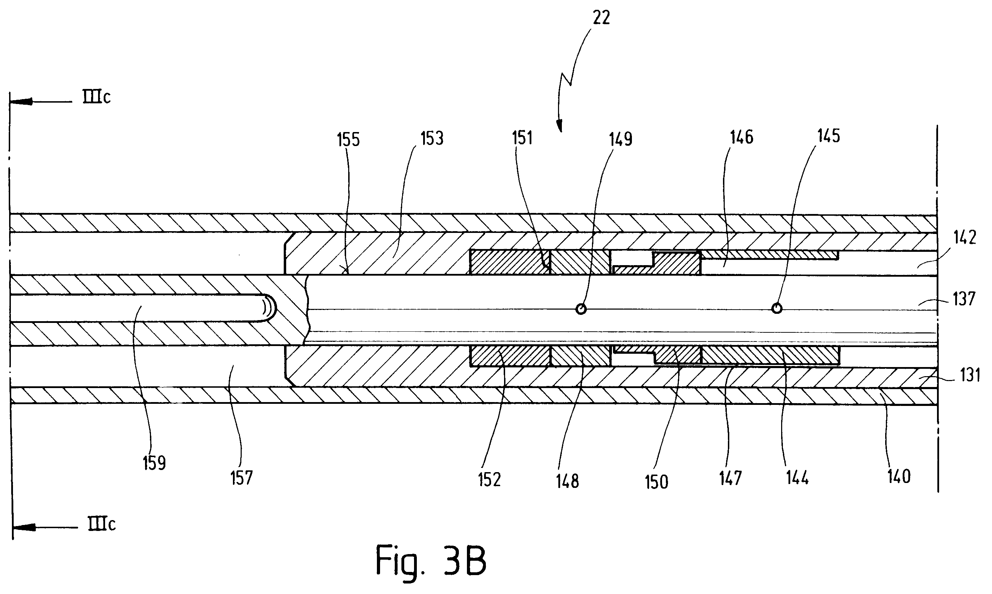

In dem offenen Ölraum 142 läuft auf der rechten Seite von Fig. 3B ein erstes Kolbenelement 144, das mit der Stange 137 verstiftet ist, wie mit 145 angedeutet wurde. Das erste Kolbenelement 144 ist in dem inneren Rohr 131 axial verschiebbar. Das ringförmig ausgebildete erste Kolbenelement 144 bildet einen weiten Kanal 146 zwischen sich und der Stange 137. Auf dieser Seite läuft das erste Kolbenelement 144 dicht in dem inneren Rohr 131. Auf der gegenüberliegenden Seite bildet das erste Kolbenelement 144 einen engen Kanal 147 zwischen sich und dem inneren Rohr 131. Auf dieser Seite liegt das erste Kolbenelement 144 dicht an der Stange 137.

Von dem ersten Kolbenelement 144 beabstandet ist ein zweites Kolbenelement 148 fest mit der Stange 137 verstiftet, wie mit 149 angedeutet wurde. Das ringförmige zweite Kolbenelement 148. läuft ebenfalls axial in dem inneren Rohr 131 und in dem offenen Ölraum 142 und ermöglicht einen axialen Ölfluß in einem Kanal zwischen sich und dem inneren Rohr 131, wobei der Kanal hier wegen seiner geringen Weite nicht dargestellt ist.

Zwischen dem ersten Kolbenelement 144 und dem zweiten Kolbenelement 148 ist ein Ventilelement 150 angeordnet, das weder mit der Stange 137 noch mit dem inneren Rohr 131 starr verbunden ist. Das Ventilelement 150 sitzt vielmehr als Ring auf der Stange 137 mit leichtem axialen Spiel zwischen dem ersten Kolbenelement 144 und dem zweiten Kolbenelement 148. Das Ventilelement 150 ermöglicht einen Ölfluß in axialer Richtung zwischen sich und dem inneren Rohr 131.

Links von dem zweiten Kolbenelement 148 schließt sich ein Dichtring 152 an, der fest mit dem inneren Rohr 131 verbunden ist, und in dem die Stange 137 dicht läuft. Der Dichtring 152 bildet somit einen unteren dichten Verschluß des offenen Ölraums 142.

Zwischen dem zweiten Kolbenelement 148 und dem Dichtring 152 ist ein Saugraum 151 vorhanden, der hier mit dem Volumen 0 dargestellt ist, da sich in der hier gezeigten Ruhestellung des Feder- und Dämpfungselementes 22 das zweite Kolbenelement 148 an den Dichtring 152 eng anlegt.

Die Stange 137 wird weiter durch eine Durchführung 155 eines Endabschnittes 153 des inneren Rohres 131 geführt. Die Stange 137 ist damit gegen radiales Spiel gesichert. Der Endabschnitt 153 wirkt wiederum, wie in dem ersten Ausführungsbeispiel, als pneumatischer Kolben.

Links von dem Endabschnitt 153, d.h. wenn das Feder- und Dämpfungselement 22 in das Stützrohr 18 des Farrades 10 eingebaut ist, unterhalb des Endabschnittes 153, schließt sich ein dicht abgeschlossener Luftraum 157 an, der das Federelement bildet.

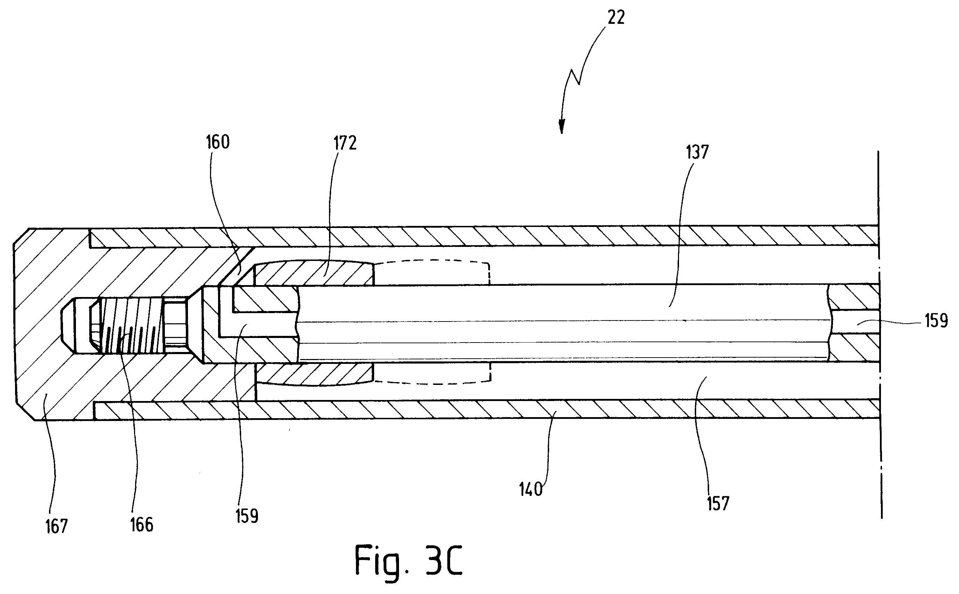

Die Stange 137 ist in diesem Bereich mit einer axialen Bohrung 159 versehen, wie in der aufgebrochenen Darstellung zu erkennen ist. Die axiale Bohrung 159 setzt sich, wie in Fig. 3C dargestellt ist, bis zu einem unteren Ende hin fort, wo sie über eine radiale Bohrung 160 mit dem Luftraum 157 kommuniziert, so daß die axiale Bohrung 159 das Volumen des Luftraumes 157 vergrößert, ohne daß die Außenabmessungen des Feder- und Dämpfungselementes gegenüber dem ersten Ausführungsbeispiel vergrößert sind.

Die Stange 137 ist mit einem Gewinde 166 in einem Sockelabschnitt 167, der starr mit dem äußeren Rohr 140 verbunden ist, verschraubt, wie dies in ähnlicher Weise bereits in dem ersten Ausführungsbeispiel geschildert wurde. An dem Sockelabschnitt 167 können Anschlagelemente 170 vorgesehen sein.

Ebenso wie bei dem ersten Ausführungsbeispiel können hier in entsprechender Weise Verstelleinrichtungen vorgesehen sein, mit denen sowohl die Dämpfungskonstante des Dämpfungselementes als auch die Federkonstante des Federelementes verstellt werden können, so daß sich hier eine weitere Beschreibung der Verstelleinrichtung erübrigt.

Die Wirkungsweise der Anordnung gemäß der Figuren 3A bis 3C unterscheidet sich von derjenigen der Figuren 2A bis 2C und wird hier daher erläutert:

Die Figuren 3A bis 3C zeigen das Feder- und Dämpfungselement in seiner Ruhelage, in der das Element ausgefedert ist.

In dieser Lage liegt das zweite Kolbenelement 148 dicht an dem Dichtring 150 an, und das gesamte Öl befindet sich in dem offenen Ölraum 142 im wesentlichen rechts bzw. oberhalb des ersten Kolbenelementes 144.

Beim Einfedern des Feder- und Dämpfungselementes 22 aufgrund einer axial wirkende Last bewegt sich das Sockelelement 167 zusammen mit dem äußeren Rohr 140 relativ zu dem Gegenflansch 130 und dem inneren Rohr 131 nach rechts, wie dies im ersten Ausführungsbeispiel ebenfalls der Fall war.

Mit dem Sockelelement 167 bewegt sich die Stange 137 und mit dieser das zweite Kolbenelement 148, das Ventilelement 150 und das erste Kolbenelement 144 nach rechts.

Das zweite Kolbenelement 148 trennt sich dabei von dem Dichtring 152, so daß sich in dem nun größer werdenden Saugraum 151 ein Unterdruck ausbildet, der das Öl ansaugt. Die hohe Saugwirkung wird insbesondere durch die nur geringe radiale Öffnung des zweiten Kolbenelementes 148 erzielt. Das Ventilelement 150, das als Rückschlagventil ausgebildet ist, schlägt durch den Ölstrom gemäß seinem axialen Spiel an das zweite Kolbenelement 148 an.

Das Öl strömt nun durch den geöffneten weiten Kanal 146 des ersten Kolbenelementes 144 aufgrund dessen geringeren Strömungswiderstandes an dem Ventilelement 150 und dem zweiten Kolbenelement 148 vorbei in den Saugraum 151.

Beim Ausfedern läuft der Vorgang in umgekehrter Weise ab. Sobald die äußere Belastung nachläßt, sorgt der sich wieder ausdehnende Luftraum 157 des pneumatischen Elementes für eine Rückstellkraft.

Das Öl wird, wenn sich das Sockelelement 157 mit der Stange 137 wieder nach links bewegt, aus dem Saugraum 151 nach rechts in den offenen Ölraum 142 gedrückt. Dabei strömt das Öl durch den engen Kanal 147, da das Ventilelement 150 durch Anschlag an das erste Kolbenelement 144 den weiten Kanal 146 verschließt. Der Ausfedervorgang läuft daher langsamer ab als der Einfedervorgang.

Wie bereits erwähnt, ist der offene Ölraum 142 in der Weise offen, daß zwischen dem offenen Ölraum 142 und dem Hohlraum 133 keine Dichtmittel vorgesehen sind, sondern zwischen diesen beiden Räumen ein Ölfluß möglich ist, wobei der Hohlraum 133 durch den Verschlußstopfen 133a in dem offenen Gegenflansch 130 abgedichtet ist, so daß das Öl jederzeit nachgefüllt werden kann. Auch bei geringen Ölverlusten durch Undichtigkeiten arbeitet das Dämpfungselement weiter, solange überhaupt ausreichend Öl in dem offenen Ölraum 142 vorhanden ist, um den Saugraum 151 zu füllen.

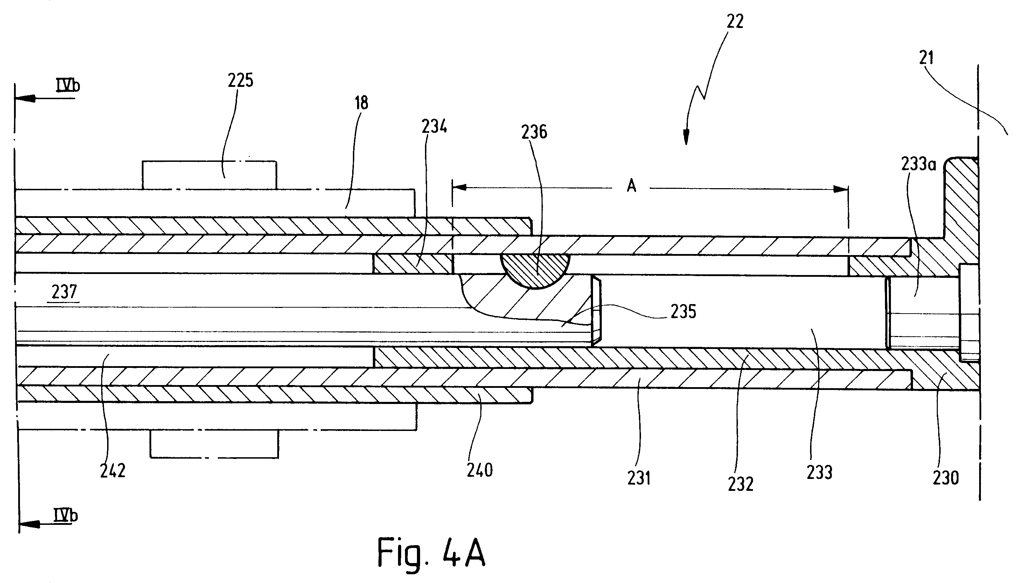

In den Fig. 4A bis 4C ist ein weiteres Ausführungsbeispiel des zweiten Feder- und Dämpfungselementes 22 dargestellt, wie es zum Einbau in das Stützrohr 18 des Fahrrades 10 vorgesehen ist, wobei das Feder- und Dämpfungselement 22 mit einer Klemmvorrichtung 225 befestigt wird.

Der in Fig. 4A dargestellte Abschnitt des Feder- und Dämpfungselementes 22 weist in ähnlicher Weise wie die in Fig. 2A und 3A dargestellten entsprechenden Abschnitte einen Gegenflansch 230 zum Befestigen des Feder- und Dämpfungselementes 22 an dem Sattel 20 auf.

Der Gegenflansch 230 trägt ein inneres Rohr 231, das mit einem rohrartigen Fortsatz 232 des Gegenflansches 230 fest verbunden ist. Der rohrartige Fortsatz 232 weist dabei eine sich axial erstreckende Nut A auf.

Der rohrartige Fortsatz 232 umschließt wie zuvor einen belüfteten Hohlraum 233, der durch einen abnehmbaren Verschlußstopfen 233a dicht verschlossen ist.

Ein Endabschnitt 234 des rohrartigen Fortsatzes 232 dient wiederum als Durchführung eines Endabschnittes 235 einer Stange 237, in der die Stange 237 axial beweglich ist. Der Endabschnitt 235 ist diesmal, wie die Stange 237 selbst, ebenso wie die dazu komplementäre Durchführung durch den Endabschnitt 234 des rohrartigen Fortsatzes 232 rund ausgebildet.

Die Stange 237 ist im Bereich ihres Endabschnittes 235 mit einer Scheibenfeder 236 versehen, die in der Nut A des rohrartigen Fortsatzes 232 axial läuft und eine drehfeste Verbindung mit dem inneren Rohr 231 herstellt verbunden.

Die Stange 237 läuft wie bei dem Ausführungsbeispiel der Fig. 3A bis 3C nicht dicht in der Durchführung.

Das innere Rohr 231 läuft axial verschiebbar in einem äußeren Rohr 240.

An den Endabschnitt 234 des rohrartigen Fortsatzes 232 schließt sich ein offener Ölraum 242 an, der wegen der nicht dichten Durchführung der Stange 237 in offener Verbindung mit dem Hohlraum 233 steht. Der Hohlraum 233 dient daher als Fortfühuung und Vergrößerung des offenen Ölraumes 242. Durch den Hohlraum 233 kann insbesondere Öl nach Abnahme des Verschlußstopfens 233a nachgefüllt werden. Im gefüllten Zustand des offenen Ölraumes 242 kann die Füllhöhe des Öls bis in den Hohlraum 233 reichen.

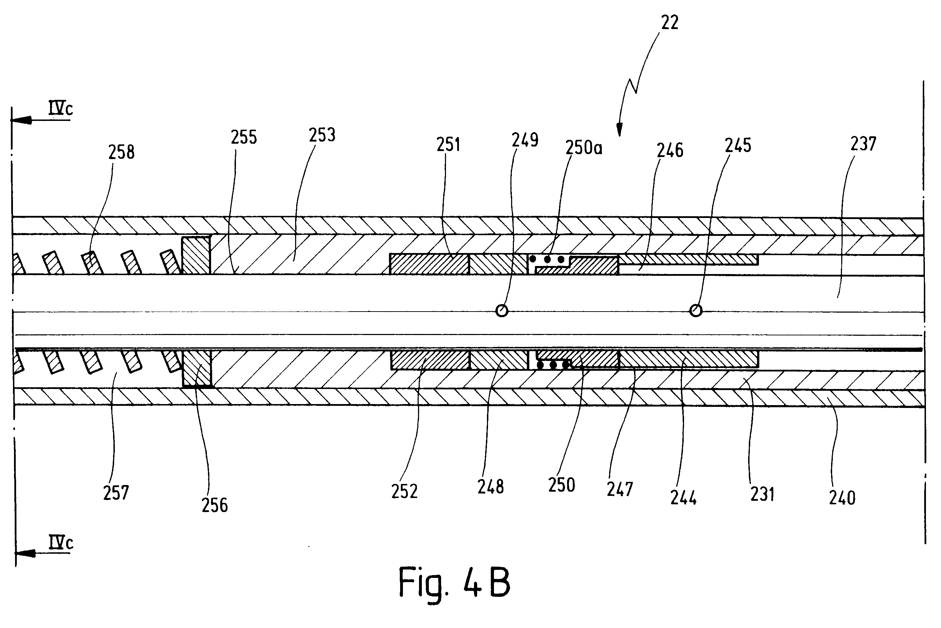

Im weiteren in Fig. 4B dargestellten Verlauf des Feder- und Dämpfungselementes 22 sind in gleicher Weise wie bei dem vorherigen Ausführungsbeispiel ein an der Stange 237 befestigtes (mit einer Verstiftung 245) erstes Kolbenelement 244 mit einem weiten Kanal 246 und einem engen Kanal 247, und ein zweites Kolbenelement 248 (ebenfalls mit einer Verstiftung 249 an der Stange 237 befestigt), ein Ventilelement 250, ein Saugraum 251 und ein Dichtring 252 angeordnet, die zusammen mit dem offenen Ölraum 242 wie zuvor das Dämpfungselement bilden.

Das Ventilelement 250 ist zusätzlich mit einer Feder 250a in Richtung des ersten Kolbenelementes 244 federbelastet. Dadurch wird, auch wenn kein Öl in Richtung des ersten Kolbenelementes 244 fließt, der weite Kanal 246 dicht verschlossen, so daß die Dämpfungswirkung auch bereits dann einsetzt, wenn der Ölstrom unmittelbar nach Beginn des Ausfedervorganges noch nicht ausreicht, um das Ventilelement 250 gegen das erste Kolbenelement 244 zu drücken.

Die Stange 237 wird wie zuvor in einem Endabschnitt 253 des inneren Rohres 231 in einer Durchführung 255 desselben geführt. An dem in Fig. 4B linken Ende des Endabschnittes 255 ist ein erster Anschlag 256 für eine Stahldruckfeder 258 vorgesehen, der fest mit dem Endabschnitt 253 verbunden ist. Der Endabschnitt 253 wirkt wie zuvor als pneumatischer Kolben.

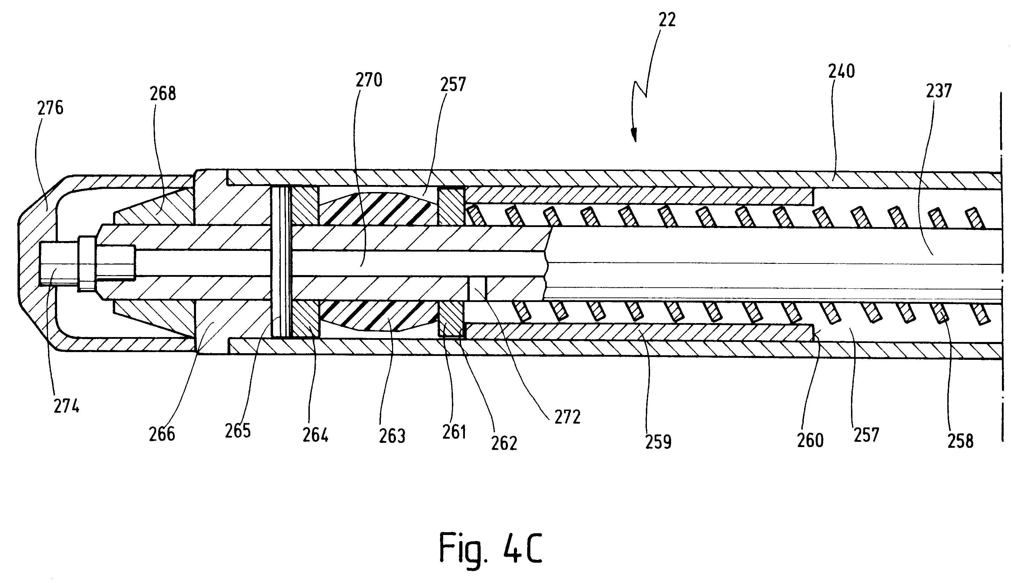

Die Stahldruckfeder 258 ist in einem abgedichteten Luftraum 257 angeordnet, der wie zuvor, zusammen mit dem Endabschnitt 253, das pneumatische Federelement bildet. Die Stahldruckfeder 258 wird teilweise in einer mit dem äußeren Rohr 240 fest verbundenen Hülse 259 geführt, wie in Fig. 4C dargestellt ist.

Eine in Fig. 4C rechte Begrenzungsfläche 260 der Hülse 259 begrenzt den maximalen Lauf des Federelementes. Der maximale Lauf des Federelementes beim Einfedern ist durch das Anschlagen des ersten Anschlages 256 des Endabschnittes 253 des inneren Rohres 231 an der rechten Begrenzungsfläche 260 bestimmt.

Die Stahldruckfeder 258 erstreckt sich in dem Luftraum 257 bis zu einem zweiten Anschlag 261, der in der hier dargestellten ausgefederten Ruhestellung an einer linken Begrenzungsfläche 262 der Hülse 259 anliegt, mit dieser jedoch nicht fest verbunden ist.

Die Stahldruckfeder beansprucht nur wenig Volumen in dem Luftraum 257, so daß der überwiegende Teil des Volumens des Luftraumes 257 als pneumatisches Federelement zur Verfügung steht.

Der Luftraum 257 wird durch den zweiten Anschlag 261 nicht dicht abgeschlossen, sondern reicht bis in den Bereich links von dem zweiten Anschlag 261. Links von dem zweiten Anschlag 261 ist ein elastomeres Element 263 in dem Luftraum 257 vorgesehen, das axial bis zu einem dritten Anschlag 264 reicht. Das elastomere Element 263 weist eine andere, zum Beispiel kleinere Federkonstante als die Stahldruckfeder 258 auf.

Der dritte Anschlag 264 ist fest mit dem äußeren Rohr 240 verbunden. In diesem Bereich des Feder- und Dämpfungselementes 22 ist die Stange 237 mittels eines Querstiftes 265, der in einer entsprechenden radialen Nut eines Sockelabschnittes 266 liegt, drehfest mit dem Sockelabschnitt 266 verbunden. Der Sockelabschnitt 266 ist seinerseits fest mit dem äußeren Rohr 240 verbunden, so daß die Stange 237 in diesem Bereich ebenfalls mit dem äußeren Rohr 240 drehfest verbunden ist. Die Stange 237 ist somit in dem Feder- und Dämpfungselement 22 insgesamt durch die Paßfeder 236 (Fig. 4A) und den Querstift 265 drehfest angeordnet, so daß die Stange 237 auch gegen Torsion geschützt ist.

Der dritte Anschlag 264 bildet einen luftdichten Abschluß des Luftraumes 257.

Mit einer Mutter 268 ist die Stange 237 mit dem Sockelabschnitt 266 verschraubt und dadurch auch in axialer Richtung gegenüber dem Sockelabschnitt 266 unbeweglich.

In der Stange 237 ist weiterhin eine axiale Bohrung 270 ähnlich wie bei dem vorherigen Ausführungsbeispiel vorgesehen, die über einer radialen Bohrung 272 mit dem Luftraum 257 kommuniziert. Der Luftraum 257 des pneumatischen Elementes wird damit um das Volumen der axialen Bohrung 270 vergrößert.

Die axiale Bohrung 270 reicht bis zu einem Luftventil 274, das die axiale Bohrung 270 und den mit dieser in Verbindung stehenden Luftraum 257 nach außen luftdicht abschließt. Über das Luftventil 274 ist die axiale Bohrung 270 und der Luftraum 257 mit Luft befüllbar.

Den in Fig. 4C linken bzw. den unteren Abschluß des Feder- und Dämpfungselementes 22 bildet eine Verschlußkappe 276, die insbesondere das Luftventil 274 schützt.

Die Stahldruckfeder 258 und das elastomere Element 263 bilden eine Reihenschaltung in dem Federelement, die wiederum parallel zu dem aus dem Luftraum 257 und der axialen Bohrung 270 gebildeten pneumatischen Federelement geschaltet ist.

Die Funktionsweise des in den Fig. 4A bis 4C dargestellten Ausführungsbeispiels ist hinsichtlich des Dämpfungselementes gleich zu derjenigen des Ausführungsbeispiels der Fig. 3A bis 3C, unterscheidet sich jedoch hinsichtlich des Federelementes, so daß im folgenden nur dessen Funktionsweise gesondert erläutert wird.

Das Feder- und Dämpfungselement 22 ist in den Fig. 4A bis 4C wieder in seiner ausgefederten Ruhelage dargestellt.

Durch eine axial wirkende Last bewegt sich wie zuvor das äußere Rohr 240 relativ zu dem Gegenflansch 230 und dem inneren Rohr 231 nach rechts. Mit dem äußeren Rohr 240 bewegt sich die Stange 237 ebenfalls nach rechts.

Durch die axiale Bewegung übt der Endabschnitt 253 des inneren Rohres 231 über den ersten Anschlag 256 eine nach links gerichtete Kraft auf die Stahldruckfeder 258 aus, die diese Kraft über den zweiten Anschlag 261 auf das elastomere Element 263 überträgt.

Ist die Federkonstante des elastomeren Elementes kleiner als die der Stahldruckfeder 258, so wird zunächst das elastomere Element 263 zusammengedrückt, indem die Stahldruckfeder 258 den zweiten Anschlag 261 nach links bewegt, der dann von der linken Begrenzungsfläche 262 der Hülse 259 abhebt. Ist die Federkonstante der Stahldruckfeder 258 sehr viel größer als diejenige des elastomeren Elementes 263, so bleibt die Stahldruckfeder 258 dabei entspannt. Die Federkonstante der Stahldruckfeder 258 kann aber auch im Bereich der Federkonstante des elastomeren Elementes 263 liegen, so daß gleichzeitig mit dem elastomeren Element 263 die Stahldruckfeder 258 leicht zusammengedrückt wird.

Gleichzeitig wird mit dem Zusammendrücken des elastomeren Elementes 263 die Luft in dem Luftraum 257 und in der axialen Bohrung 270 durch den als Pneumatikkolben wirkenden Endabschnitt 253 komprimiert. Die Federkonstante des pneumatischen Elementes ist in diesem Bereich der Kompression noch in etwa konstant, wie sich dies aus den physikalischen Zusammenhängen der Kompression eines Gases ergibt. Diese anfängliche Federkonstante des pneumatischen Federelementes hängt von dem Luftdruck in dem Luftraum 257 in ausgefedertem Zustand ab, der durch eine entsprechende Befüllung des Luftraumes 257 über das Luftventil 274 eingestellt werden kann.

Beim weiteren Einfedern, wenn zum Beispiel die axial wirkende Last groß ist, wird, wenn sich das elastomere Element 260 nicht weiter zusammendrücken läßt, auch die Stahldruckfeder 258 zusammengedrückt. Dadurch wird auch der Luftraum 257 weiter komprimiert, wobei die Federkonstante des pneumatischen Federelementes nun stetig zunimmt, wie dies wiederum aus der physikalischen Zustandsgleichung der in dem Luftraum 257 eingeschlossenen Luft ergibt.

Kleinere Stöße können demnach dann, wenn die Federkonstante des elastomeren Elementes 236 kleiner als die Federkonstante der Stahldruckfeder 258 ist, durch das elastomere Element 263 allein abgefedert werden, während bei härteren Stößen die Federwirkung durch die härtere Stahldruckfeder 258 und die zunehmende Federkonstante des komprimierten Luftraumes 257 und der damit in Verbindung stehenden axialen Bohrung 270 erzielt wird.

Das pneumatische Federelement bewirkt durch seine stetig veränderliche Federkonstante einen stetigen Übergang der unterschiedlichen Federkonstanten des elastomeren Elementes 263 und der Stahldruckfeder 258.

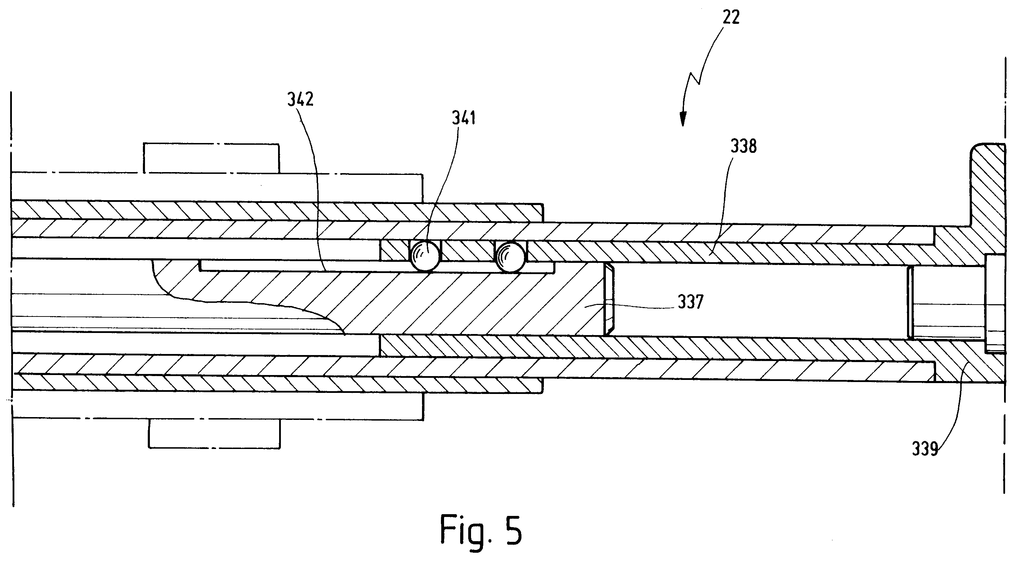

In Fig. 5 ist schließlich ein viertes Ausführungsbeispiel des ersten Abschnittes des Feder- und Dämpfungselementes 22 dargestellt, an das sich links jeweils die weiteren Abschnitte entsprechend den Fig. 3B, 3C bzw. 4B, 4C anschließen.

Das Feder- und Dämpfungselement 22 weist nun eine Stange 337 auf, die in einem rohrartigen Fortsatz 338 eines Gegenflansches 339 axial beweglich geführt ist.

In dem rohrartigen Fortsatz 338 sind Stahlkugeln 341 angeordnet, die kugellagerähnlich in den rohrartigen Fortsatz 338 rotieren können. In der Stange 337 ist auf dem Umfang eine an die Stahlkugeln 341 angepaßte axial verlaufende Nut 342 ausgenommen, in der die Stahlkugeln 341 beim Ein- und Ausfedern laufen, wobei die Stahlkugeln 341 und die Nut 342 die Stange 337 in dem rohrartigen Fortsatz 338 und damit in dem Feder- und Dämpfungselement 22 undrehbar halten.

## Patentansprüche

1. Fahrrad mit einem Rahmen (11) und einem am Rahmen (11) befestigten Sattel (20), wobei zwischen Rahmen (11) und Sattel (20) ein Feder- und Dämpfungselement (22) angeordnet ist, das ein hydraulisches Dämpfungssystem sowie ein Federelement umfaßt, dadurch gekennzeichnet, daß das hydraulische Dämpfungssystem beim Einfedern und beim Ausfedern des Feder- und Dämpfungselementes (22) eine unterschiedliche Dämpfungskonstante aufweist.

2. Fahrrad nach Anspruch 1, dadurch gekennzeichnet, daß das Federelement nur aus einem pneumatischen Element besteht.

3. Fahrrad nach Anspruch 1, dadurch gekennzeichnet, daß das Federelement ein pneumatisches Element und zusätzlich mindestens ein elastomeres Element (263) und mindestens eine Stahldruckfeder (258) umfaßt

4. Fahrrad nach Anspruch 3, dadurch gekennzeichnet, daß das pneumatische Element parallel zu einer Reihenschaltung aus dem elastomeren Element (263) und der Stahldruckfeder (258) geschaltet ist.

5. Fahrrad nach einem oder mehreren der Ansprüche 1 bis 2, dadurch gekennzeichnet, daß mindestens eine Dämpfungskonstante im Betrieb des Feder- und Dämpfungselementes (22) einstellbar ist.

6. Fahrrad nach Anspruch 5, dadurch gekennzeichnet, daß zum Einstellen der mindestens einen Dämpfungskonstante eine erste Verstelleinrichtung (80) am Feder- und Dämpfungselement (22) angeordnet ist.

7. Fahrrad nach einem oder mehreren der Ansprüche 1 bis 6, dadurch gekennzeichnet, daß das pneumatische Element eine im Betrieb des Feder- und Dämpfungselementes (22) einstellbare Federkonstante aufweist.

8. Fahrrad nach Anspruch 7, dadurch gekennzeichnet, daß zum Einstellen der Federkonstante eine zweite Verstelleinrichtung (85) am Feder- und Dämpfungselement (22) angeordnet ist.

9. Fahrrad nach einem oder mehreren der Ansprüche 1 bis 8, dadurch gekennzeichnet, daß das Feder- und Dämpfungselement (22) ein äußeres Rohr (40) sowie ein darin geführtes inneres Rohr (31) umfaßt, wobei in dem inneren Rohr (31) ein Hydraulikkolben (45) läuft, der über eine erste Stange (55) mit einem Sockelteil (67) des äußeren Rohres (40) verbunden ist und ferner die erste Stange (55) dicht in einem Endabschnitt (58) des inneren Rohres (31) läuft.

10. Fahrrad nach Anspruch 9, dadurch gekennzeichnet, daß der Hydraulikkolben (45) auf der von der ersten Stange (55) abgewandten Seite mit einer zweiten Stange (37) versehen ist, die mit einem unrunden Abschnitt (36) in einer dazu komplementären Durchführung (33) läuft, die mit dem inneren Rohr (31) sowie einem Befestigungsflansch (30) für den Sattel (20) starr verbunden ist.

11. Fahrrad nach einem oder mehreren der Ansprüche 1 bis 8, dadurch gekennzeichnet, daß das Feder- und Dämpfungselement (22) ein äußeres Rohr (140; 240) sowie ein darin geführtes inneres Rohr (131; 231) umfaßt, wobei in dem inneren Rohr (131; 231) ein erstes Kolbenelement (144; 244) und ein dazu beabstandetes zweites Kolbenelement (148; 248) läuft, die beide über eine Stange (137; 237; 337) mit einem Sockelelement (167; 266) des äußeren Rohres (140; 240) fest verbunden sind, wobei die Stange (137; 237; 337) dicht in einem fest mit dem inneren Rohr (131) verbundenen Dichtring (152; 252) läuft.

12. Fahrrad nach Anspruch 11, dadurch gekennzeichnet, daß das erste Kolbenelement (144; 244) und das zweite Kolbenelement (148; 248) in einem offenen Ölraum (142; 242) laufen, wobei beim Einfedern des Feder- und Dämpfungselementes (22) Öl aus dem offenen Ölraum (142; 242) in einen Saugraum (151; 251) zwischen dem Dichtring (152; 252) und dem zweiten Kolbenelement (148; 248) gesaugt wird.

13. Fahrrad nach Anspruch 12, dadurch gekennzeichnet, daß der offene Ölraum (142; 242) im Betrieb des Feder- und Dämpfungselementes mit Öl nachfüllbar ist.

14. Fahrrad nach einem oder mehreren der Ansprüche 11 bis 13, dadurch gekennzeichnet, daß zwischen dem ersten Kolbenelement (144; 244) und dem zweiten Kolbenelement (148; 248) ein Ventilelement (150; 250) angeordnet ist.

15. Fahrrad nach Anspruch 14, dadurch gekennzeichnet, daß das Ventilelement (250) federbelastet ist.

16. Fahrrad nach einem oder mehreren der Ansprüche 11 bis 15, dadurch gekennzeichnet, daß ein Endabschnitt (136) der Stange (137) mit einer Umfangsverzahnung versehen ist, die in einer dazu komplementären Durchführung (133) läuft, die mit dem inneren Rohr (131) sowie einem Gegenflansch (130) für den Sattel (20) starr verbunden ist.

17. Fahrrad nach einem oder mehreren der Ansprüche 11 bis 15, dadurch gekennzeichnet, daß die Stange (237) mittels mindestens eines Querstiftes (265) und/oder einer in einer Nut A eines rohrartigen Fortsatzes (232) eines Gegenflansches (230) laufenden Paß- oder Scheibenfeder (236) in dem inneren Rohr (231) und dem äußeren Rohr (240) undrehbar gesichert ist.

18. Fahrrad nach einem oder mehreren der Ansprüche 11 bis 15, dadurch gekennzeichnet, daß die Stange (337) mittels Stahlkugeln (341), die in einer axialen Nut (342) der Stange (337) laufen, in dem inneren Rohr (231) und dem äußeren Rohr (240) undrehbar gesichert ist.

19. Fahrrad nach einem oder mehreren der Ansprüche 10 bis 17, dadurch gekennzeichnet, daß die Stange (137; 237) eine axiale Bohrung (159; 270) aufweist, die mit einem abgeschlossenen Luftraum (157; 257) des pneumatischen Federelementes kommuniziert.
